# EUROPEAN PATENT APPLICATION

(11) **EP 1 026 865 A2**
(43) Date of publication of application: **09.08.2000**
(21) Application number: 99126173.6
(22) Date of filing: 29.12.1999
(51) Int. Cl.: H04L 29/06

(54) **Method of transmitting information**

(30) Priority: 02.02.1999 JP 2559999
(71) Applicant: Fullcast Adgram Interaktive Inc., Tokyo (JP)
(72) Inventor: Fukui, Masahiro, Tokyo (JP)
(74) Representative: Goddar, Heinz J., Dr.

(57) **Abstract**

A method of transmitting information makes it possible to send and receive data without restricting terminal device, without requiring complicated operation, and communicate between different types of terminal devices. Processing contents corresponding to a procedure that a transmission signal undergoes in the course of transmission over the communication network are added in the form of a protocol to the transmission signal at the time of creation of transmission signal.

## Description

### Field of the Invention

This invention relates to a method of transmitting information for transmitting contents comprising elements such as sound, image, and text, etc. via a communication network. In particular, it relates to a method of transmitting information that makes it possible to send and receive information without the need for special terminal equipment.

### Backgrounds of the Invention

In recent years, with the development of communication networks, information communications involving transmission of sound, image and text information, or information consisting of a combination of these elements, have been effected by a variety of terminal devices connected to the communication networks. In addition, with the diversified types of information, demands for services to send information requested by users or receivers via the communication networks are increasing.

Among conventional methods of transmitting information, a method of transmitting text data to pagers as a terminal device exist, for example.

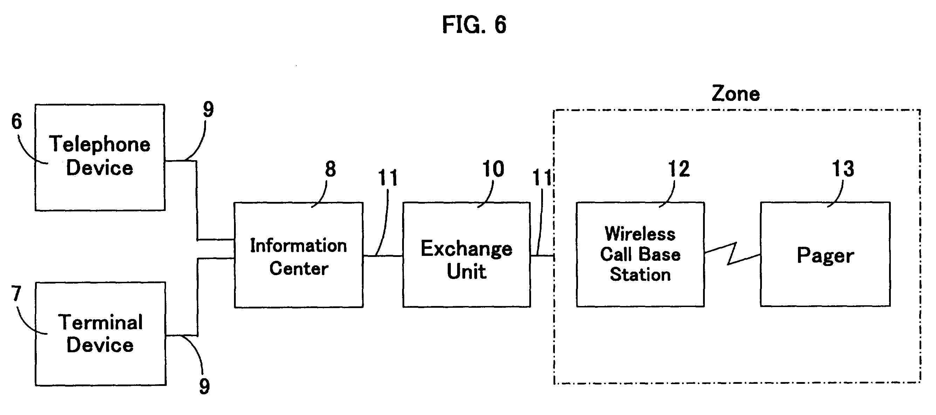

Fig. 6 shows an information transmission system using a pager. The information transmission system comprises an information center 8 into which a call number and a message are input by a terminal device 7 such as a telephone 6 or a personal computer (hereinafter referred to as a "PC terminal") via a public line 9; an exchange 10 into which the call number and message are input from the information center 8 via a relay line 11; and a wireless call base station 12 into which the call number and message are input from the exchange 10 via the relay line 11, and which in turn transmits the call number and the message to a pager 13 that is within its effective zone.

In the information transmission system described above, a receiver or user who desires receipt of information to be transmitted selects the desired information and performs an operation to register it in the information center 8. The information center 8 transmits the information to the registered receiver from the wireless call base station at a specified date and time. In this way the receiver's pager 13 is able to display text information from a variety of services, text information such as weather forecast, fortune telling and news, etc.

In conventional information transmission methods, however, specialized terminal equipment and skill in operating it are required. Therefore, the cost of the equipment is high, and, at the same time, people who are not skilled at machine operation cannot easily receive the information transmission service, so that the number of people who can use the information service is limited. In addition, the information cannot be sent and received unless the sender and receiver are using equipment supporting the same data format.

### Summary of the Invention

Accordingly, it is an object of this invention to provide a method of transmitting information that neither restricts available terminal equipment that may be used nor requires a complicated operation, so that information can be sent and received even through different types of terminals.

In order to achieve the objective stated above, this invention provides a method of transmitting information in which a transmission signal is created from elements such as text, image, sound, etc. and transmitted via a communication network such as a public line comprising adding processing contents in the form of a protocol to the transmission signal at the time of the creation of the transmission signal, the processing contents corresponding to a procedure that the transmission signal undergoes in the course of transmission via the communication network.

In the method of transmitting information described above, the processing contents may be defined by a destination of the receiver to which the transmitted signal is sent, the time of transmission and a form of transmission, etc. In addition, the processing contents may be defined by a process through which information added to the transmission signal by a first receiver is transmitted to a second receiver via the communication network. These first and second receivers may be multiple receivers. Further, the processing contents may be defined by a process through which previously added processing contents of the destination to which the transmission signal is to be sent, the time of transmission and the form of transmission, etc. is changed if a request for such change is made.

### Brief Description of the Drawings

The invention will be explained in more detail in conjunction with appended drawings, wherein:
Fig. 1 is an explanatory view showing an information transmission system in accordance with an embodiment of the invention;
Fig. 2 is an explanatory view showing the transmission control device shown in Fig. 1;
Fig. 3 is an explanatory view showing the memory shown in Fig. 2;
Fig. 4(a)-4(c) are explanatory viewes showing the contents protocol;
Fig. 5 is a flow chart of a method of transmitting information in accordance with an embodiment of the invention; and
Fig. 6 is a view showing an information transmission system using a pager.

### Detailed Description of the Preferred Embodiments

Preferred embodiments of the invention will now be explained below in detail with reference to the drawings.

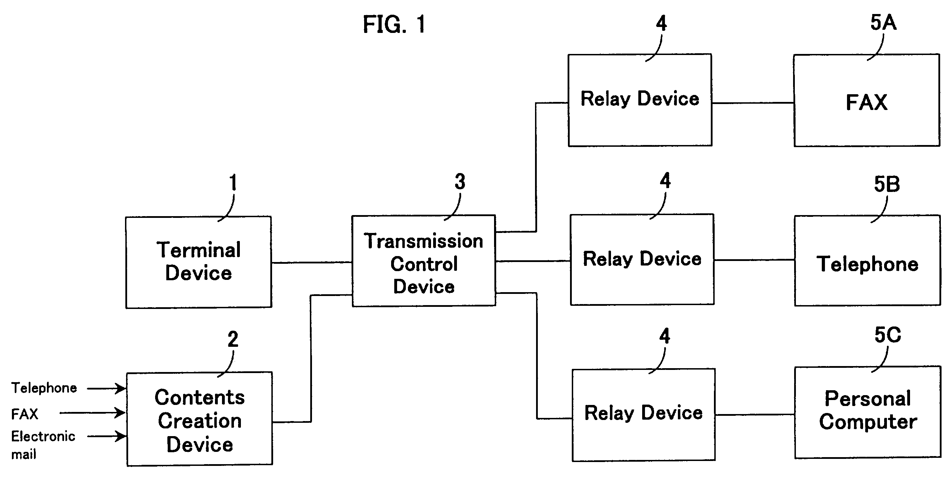

Fig. 1 shows an information transmission system in accordance with a method of transmitting information of this invention. The system comprises a terminal device 1 capable of creating the contents of the information to be sent, the information comprising text, image, sound, etc., to which a header containing control information such as transmission destination, transmission time and form of transmission, etc. is added in the form of a protocol, and also capable of outputting data that can be added to the contents in the transmission process; a contents creation device 2 that creates the contents to be transmitted by inputting information to be transmitted such as text, image, sound, etc. via telephone, FAX, electronic mail, etc.; a transmission control device 3 that stores and manages the contents that are provided into a memory, and transmits the contents individually according to a transmission schedule or at the date and time desired by the receiver; relay devices 4, each of which connects the transmission control device 3 with a receiver's terminal device; and user terminal devices such as FAX 5A, telephone 5B or PC terminal 5C, that are connected to the transmission control device 3 via the relay device 4, respectively.

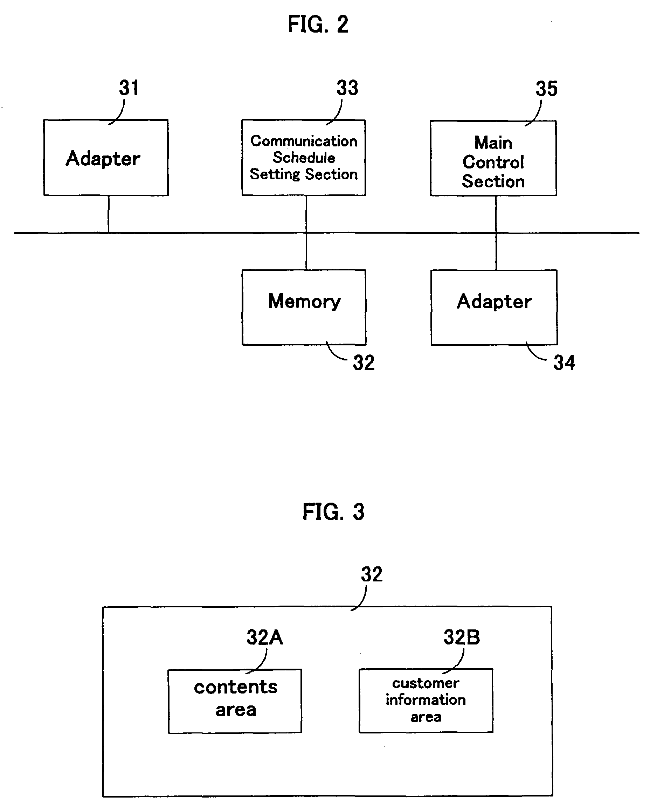

Fig. 2 shows the transmission control device 3. It comprises, for example, an adapter 31 that reads in original contents created by an information provider such as a company and converts those contents into an intermediate format; a memory 32 that stores the contents so converted; a transmission schedule setting section 33 that sets an contents transmission schedule by inputting the converted contents and receiver information from the memory 32; an adapter 34 that further converts the converted contents from the intermediate format into a format corresponding to the receiver's terminal device; and a main controller 35 that controls the sending and receiving of the further converted contents. The receiver information includes, for example, the type of contents desired to be transmitted; a form in which the contents are to be transmitted (for example, FAX, telephone or electronic mail); the receiver's location; the type of the user terminal device which the receiver has; and the receiver's name, address and age, etc.

Fig. 3 shows the memory 32. It comprises a contents area 32A that stores the converted contents, and a customer information area 32B that stores customer information of the information provider, the receiver, etc. The customer information area 32B stores, for example, receiver information which is provided based on a way that the receiver calls the contents creation device 2, which creates contents regarding personal information (name, address, telephone number, desired contents, desired transmission time and desired form of transmission) of the receiver, and designates registration thereof, and information on the information provider such as corporation name, personal name, contents of service, etc. In addition, if a receiver wishes to change the time of contents transmission, the contents specifying the change of transmission time may be created and registered via the contents creation device 2, whereby the change in time of transmission to the receiver is stored in the customer receiver information area 32B.

The terminal device 1 is, for example, a PC terminal having an input section such as a keyboard. A contents creator creates the contents by inserting the contents to be transmitted, such as text and image, according to a predetermined creation procedure of a previously provided form, by operating the keyboard. The contents may be contents including voice in addition to text and image, contents consisting only of image, or contents consisting only of sound. This form has columns where the contents creator enters such items as the time of contents transmission, the desired form of contents transmission and/or receiver information. These items are added to the header of the data that constitute the contents to be transmitted.

The contents creation device 2, in addition to performing the registration process for the receiver that desires to receive the service, has a specified form for the information provider to create contents via telephone or FAX without depending on a terminal device such as a PC terminal. The procedure for the information provider to access the contents creation device by telephone and create the contents will be explained below. The form used to create contents via a telephone receiver creates contents by performing a process, such as recording and converting a voice message transmitted from the telephone receiver, etc. When the information provider specifies the creation of contents based on voice input, voice guidance corresponding to the creation procedure is transmitted. The information provider inputs voice into the telephone receiver in accordance with the voice guidance of the form. The information provider further inputs the time at which the contents are to be sent, items relating to the terminal device which is the object of transmission, etc. by operating pushbuttons on the telephone receiver. These items are added to the header of the data (to be discussed further below) which constitute the contents as the control information for the contents.

In addition, the contents creation device 2 also has a form that is used when the registered receiver wants to change the time of contents transmission. When the receiver makes a telephone call to the contents creation device 2 and assigns a change in the time of contents transmission, voice guidance is sent corresponding to the change procedure. When the receiver specifies registration of a change by operating pushbuttons on the telephone receiver to input the change in the time or time band, contents for changing the registered contents are created. The receiver information is updated by transmitting these contents to the transmission control device 3 and writing them into the customer information area 32B of the memory 32 for storage. In addition, the form of transmission of the contents and the address can be changed by similar operations.

The transmission control device 3 inputs the contents from the terminal device 1 and the contents creation device 2 via the adapter 31. When the contents having control information regarding the sender, the form of transmission, and the time of transmission added to the header are input, the adapter 31 translates the format in which the contents were created and converts it into an intermediate format. The intermediate format of the contents to be converted here can be a format that is in widespread use in today's communication networks. The memory 32 stores contents created based on the transmitted contents such as sound, image, text, etc. in the contents area 32A. In addition, the customer information area 32B stores customer information on receivers that desire transmission service of the contents under storage and on information providers who provide the contents. Further, when transmitting the contents, receiver information (for example, information from an external database) that differs from the receiver information previously stored in the customer information area 32B can be used. The transmission schedule setting section 33 sets the transmission time schedule based on the contents stored in the contents area 32A and the receiver information stored in the customer information area 32B. The scheduled contents are read out of the memory 32 based on the transmission start signal output from the main control section 35 at the time of transmission, converted into a format corresponding to the destination terminal device via the adapter 34, and transmitted to the receiver's terminal device via the relay device 4.

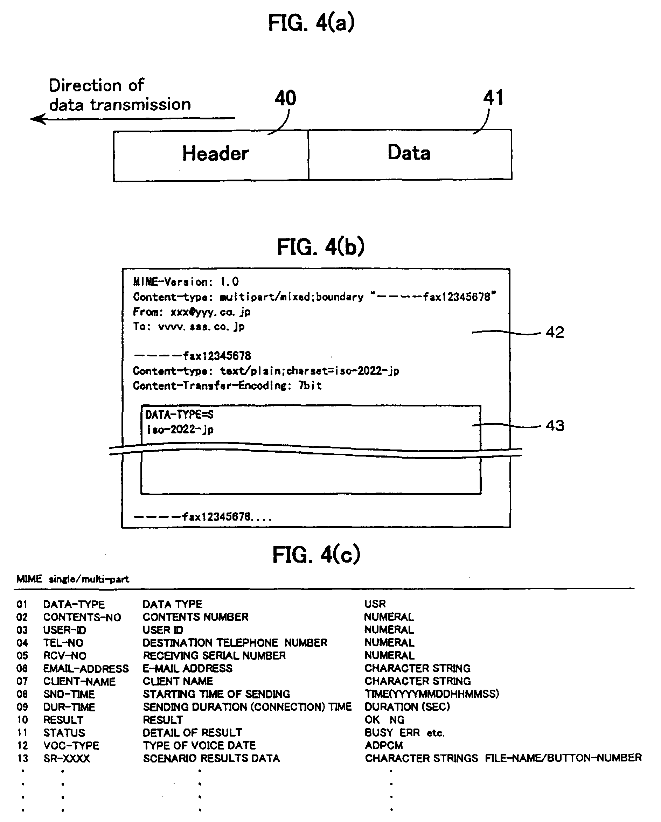

Fig. 4(a) shows the contents protocol. It comprises the header 40 added to the head of the contents and the data 41 added following the header 40. The header 40 is formed of text character strings that include information on the source of the transmitted contents, the destination, identification of the communication service, and error detection. The contents to be transmitted including text, image and sound, etc. are converted into text character strings and added as data 41.

Fig. 4(b) shows an example of the contents of the header 40, described in electronic mail format. It comprises a description section 42 described based on an electronic mail protocol, and a description section 43 in which a process corresponding to the procedure by which the transmitted contents of sound, image and text, described in the data 41, are received through transmission process, is contained in a form of protocol.

Fig. 4(c) shows the contents of the description section 43, which enables transmission of the contents to communication equipment having a different control system, by forming a header wherein information regarding contents is described in standard language, standard text character strings, for example, used in communication networks.

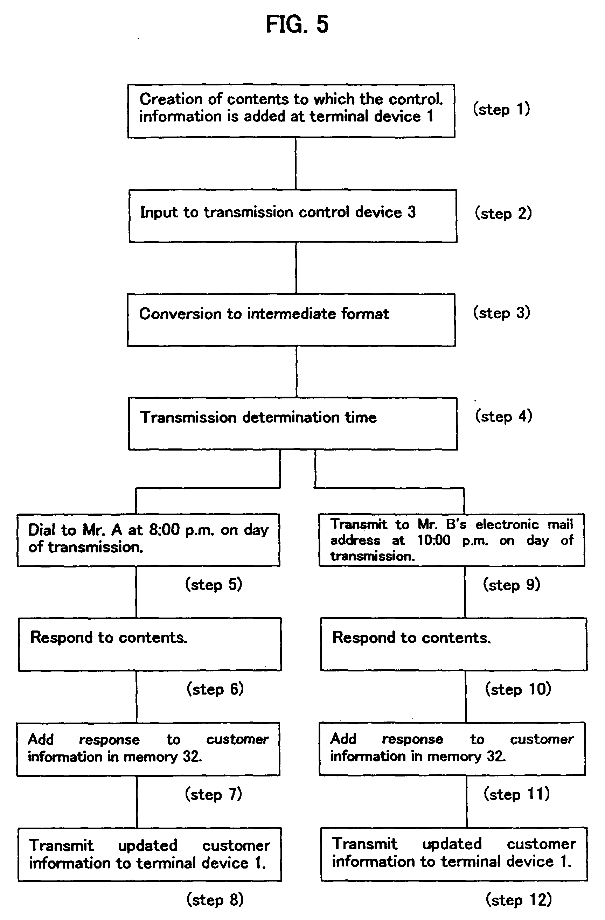

Fig. 5 shows a flowchart of a process in which a temporary staffing agency, an information provider, sends job announcements to its registrants and receives responses to them from the registrants. The temporary staffing agency creates contents on job announcements including image and text by operating an in-house PC terminal in which tools (software) for creating such contents are stored. When the contents are created, control information of the job announcements including the time and the form of transmission and the procedure for sending responses is added to a header in the form of a protocol (step 1).

The contents of the job announcements so created are input in the adapter 31 of the transmission control device 3 from the temporary-staffing agency via an exclusive line (step 2). The adapter 31 converts the format of the contents of job announcements that were input at the time of creation of the contents into an intermediate format thereof, then the converted contents are stored in the memory 32 (step 3). The converted contents of job announcements stored in the memory 32 are read out at the specified timing based on the read-out signal output from the main control section, then input in the transmission schedule setting section 33 whereby the time and the form of transmission with respect to each of the registrants are determined.

Steps by which the job announcements are transmitted to Mr. A and Mr. B, who are registrants of the temporary staffing agency, will be explained below. Mr. A has specified that the contents of the job announcements should be transmitted by telephone at 8:00 p.m., while Mr. B has specified that the contents of the job announcements should be transmitted by electronic mail at 10:00 p.m. (step 4).

At 8:00 p.m. on the day of transmission, the transmission schedule setting section 33 outputs the contents of the job announcements stored in the memory 32 to the adapter 34. The adapter 34 converts the job announcements for Mr. A that were input in the intermediate format into a voice format suitable for telephone transmission, and dials Mr. A's telephone number via the relay device 4 and a telephone company (step 5). Here, if Mr. A is not home, he is called again after a predetermined time has elapsed.

When Mr. A receives the telephone call at 8:00 p.m. on the day of transmission, after a voice message explaining the contents of the job announcements is played for a predetermined period of time, another voice message requesting for input of responses to the job announcements follows. For example, the message may ask the registrant to dial "1" if he desires to apply for the job, or "0" if he does not (step 6).

Here, if Mr. A dials "1", for example, the response is input to the adapter 34 of the transmission control device 3 via the relay device 4, then converted into an intermediate format. The fact that Mr. A wishes to apply for the job is added to the customer information by writing the contents of this response into the job announcements stored in the memory 32 (step 7).

The response to the job announcements is transmitted to the temporary-staffing agency. The timing at which this response is transmitted is determined by the transmission schedule setting section 33. For example, a response can be transmitted every time a receiver responds to the contents of a job announcement, or the responses can be transmitted at every specified time.

The response to the job announcements is read out from the memory 32 and converted by the adapter 31 from the intermediate format to the a predetermined format, then output to the terminal device 1 (step 8).

On the other hand, at 10:00 p.m. on the day of transmission, the transmission schedule setting section 33 outputs the contents of the job announcements stored in the memory 32 to the adapter 34. The adapter 34 converts the contents of the job announcements to Mr. B that were input in the intermediate format into a format suitable for electronic mail, then transmits them to Mr. B's electronic mail address via the relay device 4 (step 9).

When Mr. B receives the electronic mail from a mail server at or after 10:00 p.m. on the day of transmission using a PC terminal for example, the contents of the job announcements formed of the text and the image are displayed on the PC terminal display. The contents of the displayed job announcements have columns for response, where the receiver enters "1" if he desires to apply for the job, or "0" if he does not, for example. Here, assuming that Mr. B wishes to apply for the job, after he enters "1" in the response column, he returns the job announcement to the temporary staffing agency based on the electronic mail response procedure (step 10).

The response to the job announcements so returned is transmitted to the temporary staffing agency's mail server, and, at the same time, is input into the adapter 34 of the transmission control device 3 via the relay device 4, then converted into an intermediate format. The fact that Mr. B wishes to apply for the jobs is added to the customer information by writing the response into the contents stored in the memory (step 11). The temporary staffing agency can obtain the latest information on its registrants by receiving the customer information with the response added from the transmission control device 3 (step 12).

As described above, by transmitting contents which contains control information such as the destination, the time, the form of transmission, etc. that are added in the form of a protocol to the header of the contents to be transmitted, such as sound, image and text provided by the information provider, the transmission of contents via an existing communication network regardless of the format of each terminal device is made possible. In particular, by adding information on the form of transmission by considering the type of terminal on the receiver's side to the contents, the contents can be output to the designated terminal device without need for a special program at the time that the contents are sent, reducing the equipment cost. In addition, the receiver can freely select the type of the terminal device to be used to receive the contents, so that the contents can be received on a terminal device that the user is accustomed to using.

In the embodiment described above, although the case as in which a temporary staffing agency sends job announcements to registrants and receives responses from them has been explained as an example, this invention can also be applied to, for example, requesting survey questionnaires and receiving responses thereto, providing information on futures trading and receiving responses thereto, posting notices of withdrawals from bank accounts, requesting reservations for medical treatment and receiving response thereto, requesting ticket reservations to events and receiving response, and providing information on automobiles for sale to prospective customers and receiving responses thereto, etc. In addition, the request for transmission can also be so arranged that contents are to be transmitted when certain conditions specified by the receiver are satisfied. For example, in futures trading, contents can be transmitted when stocks of a brand-name specified by the receiver reach a certain value.

As explained above, according to the method of transmitting information of this invention, since processing contents corresponding to the procedure that the transmission signal undergoes in the course of transmission on the communication network is added in the form of protocol at the time the transmission signal is created, there is no restriction of the type of terminal device and no need for complicated operations, whereby the data can be sent and received even between different types of terminals.

The preferred embodiment of the present invention has been disclosed by way of example and it will be understood that other modifications may be occur to those skilled in the art without departing from the scope and the spirit of the appended claims.

The features disclosed in the foregoing description, in the claims and/or in the accompanying drawings may, both separately and in any combination thereof, be material for realising the invention in diverse forms thereof.

## Claims

1. Method of transmitting information wherein a transmission signal (41) to be transmitted is created, e.g. from text, image, and/or sound, and transmitted via a communication network such as a public line comprising the steps of:
adding processing contents (40) in the form of a protocol to said transmission signal at the time of said creation of said transmission signal (41), said processing contents corresponding to a procedure that said transmission signal undergo in the course of transmission via said communication network.

2. Method of transmitting information according to claim 1, wherein said processing contents (40) comprise a destination of the receiver to whom said transmission signal are sent, the time of transmission, and/or the form of transmission.

3. Method of transmitting information according to claim 1 or 2, wherein said processing contents (40) are defined by a process through which information added to said transmission signal (41) by one or more first receivers is transmitted to one or more second receivers via said communication network.

4. Method of transmitting information according to claim 3, wherein the number of first and/or second receivers is greater than one, respectively.

5. Method of transmitting information according to one of claims 1 to 4, wherein said processing contents (40) are defined by a process through which previously added processing contents, e.g. relating to the destination to which said transmission signal is sent, the time of transmission and/or the form of the transmission, are changed, if a request for such change is made.

6. Method according to one of claims 1 to 5, wherein the format of the contents sent by a sending terminal device (2) is converted to another format corresponding to a destination terminal device (5A, 5B, 5C).

7. Method according to claim 6, wherein the format of the contents sent by a sending terminal device (2) is converted to an intermediate format and subsequently converted from the intermediate format to a format corresponding to a destination terminal device (5A, 5B, 5C).

8. Method according to claim 7, characterized in that said contents are stored in said intermediate format prior to forwarding it to the destination terminal device (5A, 5B, 5C).

9. Method according to one of claims 1 to 8, wherein said content is stored until a receiving time specified for the destination terminal device (5A, 5B, 5C) has been reached.

10. Method according to claim 9, characterized in that said receiving time is independent of the processing contents added to the transmission signal.

11. Transmission control device for transmitting transmission signal according to a method according to one of claims 1 to 10, comprising means for receiving signal from a terminal device, means for sending signal to a terminal device and a main control section (35) controlling the sending and receiving of contents according to the processing contents added to the transmission signal.

12. Transmission control device according to claim 11, characterized in that it comprises means (31) for converting the contents format to an intermediate format, means (34) for converting the intermediate format to the format of a receiving terminal device and means (32) for storing the contents in the intermediate format.

13. Communication network comprising a plurality of terminal devices (1, 2, 5A, 5B, 5C), means (2) for creating a transmission signal and for adding processing contents in the form of a protocol to said transmission signal at the time of their creation, said processing contents corresponding to a procedure that said transmission signal undergoes in the course of transmission via said communication system.

14. Communication system according to claim 13, characterized in that it comprises a transmission control device according to claim 11 or 12.
